# EUROPÄISCHE PATENTANMELDUNG

(11) **EP 3 273 579 A1**
(43) Veröffentlichungstag der Anmeldung: **24.01.2018**
(21) Anmeldenummer: 17177287.4
(22) Anmeldetag: 22.06.2017
(51) Int. Cl.: H02K 15/00, H02K 3/32, H01B 13/06

(54) **VERFAHREN ZUR HERSTELLUNG EINES DRAHTES, DRAHT UND AGGREGAT**

(30) Priorität: 18.07.2016 DE 102016113212
(71) Anmelder: Schwering & Hasse Elektrodraht GmbH, 32676 Lügde (DE)
(72) Erfinder: Haase, Roxana, 31812 Bad Pyrmont (DE); Reicher, Johann, 31848 Bad Münder (DE)
(74) Vertreter: Rohmann, Michael

(57) **Zusammenfassung**

Verfahren zur Herstellung eines mit Elektroisolierlack (2) beschichteten Drahtes (1), wobei der Draht mit zumindest einer Lackschicht beschichtet wird. Der Draht wird daraufhin einem mechanischen Umformungsprozess unterzogen und der umgeformte Draht wird anschließend einer Wärmebehandlung bei einer Temperatur über 100 °C unterworfen.

## Beschreibung

Die Erfindung betrifft ein Verfahren zur Herstellung eines mit Elektroisolierlack beschichteten Drahtes, wobei der Draht mit zumindest einer Lackschicht beschichtet wird. Die Erfindung betrifft fernerhin einen mit Elektroisolierlack beschichteten Draht, sowie ein Aggregat, insbesondere eine Spule mit einem solchen Draht. - Draht meint im Rahmen der Erfindung insbesondere einen Metalldraht, der mit dem Elektroisolierlack bzw. mit der zumindest einen Lackschicht beschichtet ist. - Mit Elektroisolierlack beschichtete elektrisch leitfähige Drähte werden bei der Herstellung von elektrischen Bauteilen bzw. elektrischen Baukomponenten verwendet und zwar insbesondere für Spulen, Elektromotoren, Transformatoren und dergleichen Bauteile.

Verfahren der vorstehend genannten Art sind aus der Praxis in unterschiedlichen Ausführungsformen bekannt. Um eine Verbindung bzw. eine elektrische Verbindung des mit dem Elektroisolierlack beschichteten Drahtes herzustellen, wird der Draht zunächst bereichsweise - insbesondere an einem Drahtende - abisoliert und dann einem mechanischen Umformprozess - insbesondere einem flachen Prägen des Drahtendes - unterzogen. Das mechanisch umgeformte bzw. flach geprägte Drahtende dieses Drahtes wird anschließend elektrisch verbunden und dazu einem Lötprozess unterworfen, wobei in der Regel für mehrere Sekunden eine thermische Belastung von beispielsweise 400 °C erforderlich ist. Bei den bekannten Verfahren bzw. bei den bekannten Drähten beobachtet man nach solchen thermischen Belastungen im Bereich der Verbindungsstellen bzw. im Bereich der abisolierten Drahtenden in der noch vorhandenen Lackschicht teilweise erhebliche Rissbildungen. Diese Erscheinung beeinträchtigt die Brauchbarkeit des Drahtes als Ganzes und insoweit besteht Verbesserungsbedarf.

Demgegenüber liegt der Erfindung das technische Problem zugrunde, ein Verfahren der eingangs genannten Art anzugeben, bei dem das vorstehend beschriebene Problem einfach und effektiv beseitigt werden kann. Der Erfindung liegt weiterhin das technische Problem zugrunde einen entsprechenden Draht und ein entsprechendes Aggregat, insbesondere eine Spule mit einem solchen Draht anzugeben.

Zur Lösung des technischen Problems lehrt die Erfindung ein Verfahren zur Herstellung eines mit Elektroisolierlack beschichteten Drahtes, wobei der Draht mit zumindest einer Lackschicht beschichtet wird, wobei der Draht daraufhin einem mechanischen Umformungsprozess unterzogen wird und wobei der umgeformte Draht anschließend einer Wärmebehandlung bei einer Temperatur über 100 °C, vorzugsweise von über 125 °C unterworfen wird. Die Temperatur der Wärmebehandlung liegt zweckmäßigerweise unter 800 °C und besonders bevorzugt unterhalb von 750 °C.

Draht meint im Rahmen der Erfindung einen elektrisch leitfähigen Draht, insbesondere einen Metalldraht. Gemäß empfohlener Ausführungsform der Erfindung besteht der Draht aus Kupfer und/oder Aluminium bzw. im Wesentlichen aus Kupfer und/oder Aluminium. Grundsätzlich kann der Draht auch aus einer Legierung mit Kupfer und/oder Aluminium bzw. im Wesentlichen aus einer Legierung mit Kupfer und/oder Aluminium bestehen.

Es liegt im Rahmen der Erfindung, dass die Lackschicht (bzw. die im Patentanspruch 1 genannte Lackschicht) die äußere Lackschicht des Drahtes ist. Nach einer Ausführungsform des erfindungsgemäßen Verfahrens ist lediglich eine Lackschicht vorhanden, die dann naturgemäß die äußere Lackschicht bildet. Dabei können zur Erzeugung dieser einen äußeren Lackschicht mehrere Lagen des Lacks übereinander auf den Draht aufgebracht werden.

Gemäß einer weiteren sehr empfohlenen Ausführungsform der Erfindung wird eine innere Lackschicht (Grundlackschicht) auf den Leiterdraht aufgebracht und auf diese innere Lackschicht (Grundlackschicht) wird die (in Patentanspruch 1 genannte) Lackschicht bzw. die äußere Lackschicht aufgebracht. Dabei liegt es im Rahmen der Erfindung, dass die innere Lackschicht vollständig bzw. quasi vollständig von der äußeren Lackschicht bedeckt wird. Dabei kann die innere Lackschicht und/oder die äußere Lackschicht in Form von mehreren übereinander angeordneten Lagen des jeweiligen Lackes auf den Draht aufgebracht werden. - Gemäß einer bevorzugten Ausführungsvariante besteht die innere Lackschicht aus einem Polyesterimid oder aus einem Polyester. Zweckmäßigerweise wird für die innere Lackschicht ein modifiziertes Polyesterimid oder ein modifizierter Polyester eingesetzt und besonders bevorzugt ein THEIC-modifiziertes Polyesterimid oder ein THEIC-modifizierter Polyester (THEIC: Tris-(2-hydroxyethyl)isocyanurat).

Vorzugsweise wird im Rahmen des erfindungsgemäßen Verfahrens mit einem Mehrschicht-Lacksystem bzw. mit einem Zweischicht-Lacksystem aus einer inneren Lackschicht (Grundlackschicht) und einer äußeren Lackschicht gearbeitet. Der Anteil der äußeren Lackschicht an der Gesamtlacksicht beträgt nach empfohlener Ausführungsform 10 bis 35 Gew.-% und bevorzugt 15 bis 30-Gew.%. Die Gesamtschichtdicke der aufgebrachten Lackschichten beträgt zweckmäßigerweise 8 bis 100 µm und bevorzugt 10 bis 100µm. - Gemäß besonders bewährter Ausführungsform des erfindungsgemäßen Verfahrens wird eine Lackschicht bzw. eine äußere Lackschicht auf Basis zumindest eines Polymers aus der Gruppe "Polyamidimid, Polyester, Polyesterimid, Polyesteramidimid, Polyimid, Polyamid, Polyurethan, Polyepoxid" eingesetzt. Grundsätzlich liegt es auch im Rahmen der Erfindung Mischungen der vorstehend genannten Polymere für die äußere Lackschicht zu verwenden.

Nach besonders bevorzugter Ausführungsform der Erfindung besteht die äußere Lackschicht aus Polyamidimid bzw. im Wesentlichen aus Poylamidimid.

Es liegt im Rahmen der Erfindung, dass der Draht nach dem Aufbringen der inneren Lackschicht auf eine Temperatur von 150 bis 450 °C, bevorzugt auf eine Temperatur von 200 bis 400 °C erwärmt wird. Dabei durchläuft der mit der inneren Lackschicht beschichtete Draht zweckmäßigerweise zumindest einen Ofen. Diese Erwärmung dient der Stabilisierung der inneren Lackschicht bzw. zur Verdampfung des für die innere Lackschicht verwendeten Lösungsmittels.

Es liegt im Rahmen der Erfindung, dass der Draht nach dem Aufbringen der äußeren Lackschicht auf eine Temperatur von 150 bis 450 °C, vorzugsweise auf eine Temperatur von 200 bis 400 °C erwärmt wird. Vorzugsweise durchläuft der Draht für diese Erwärmung zumindest einen Ofen. Diese Erwärmung dient der Stabilisierung der äußeren Lackschicht und insbesondere dem Verdampfen des für die äußere Lackschicht eingesetzten Lösungsmittels. Wenn die äußere Lackschicht und/oder die innere Lackschicht in Form einer Mehrzahl von Lagen aufgebracht wird, liegt es im Rahmen der Erfindung, dass nach Aufbringung jeder Lage der beschichtete Draht eine solche (oben beschriebene) Erwärmung erfährt bzw. durch zumindest einen Ofen geführt wird und dabei entsprechend erwärmt wird. - Die vorstehend beschriebene Erwärmung bzw. die vorstehend beschriebenen Erwärmungen dienen zum effektiven bzw. funktionssicheren Aufbringen der Lackschicht bzw. der Lackschichten auf den Draht. Insoweit unterscheiden sich diese Erwärmungen von der weiter unten beschriebenen erfindungsgemäßen Wärmebehandlung.

Bei dem erfindungsgemäßen Verfahren wird der Draht mechanisch umgeformt. Grundsätzlich bestehen hier verschiedene Möglichkeiten zur mechanischen Umformung des Drahtes. Gemäß einer ersten Ausführungsform wird der Draht lediglich bereichsweise mechanisch umgeformt. Es liegt dabei im Rahmen der Erfindung, dass der Draht vor dem mechanischen Umformen an dem für die Umformung vorgesehenen Bereich bzw. an den für die Umformung vorgesehenen Bereichen abisoliert wird. Abisolieren meint dabei insbesondere, dass die Lackschicht bzw. die Lackschichten von dem für die Umformung vorgesehenen Bereich entfernt wird/werden.

Eine besonders empfohlene Ausführungsvariante der ersten Ausführungsform der Erfindung ist dadurch gekennzeichnet, dass zumindest ein Drahtende des Drahtes mechanisch umgeformt wird und zweckmäßigerweise vorher abisoliert wird. Eine sehr bevorzugte Ausführungsform zeichnet sich dabei dadurch aus, dass das zumindest eine Drahtende - durch Prägen bzw. durch flaches Prägen mechanisch umgeformt wird. Empfohlenermaßen wird zumindest ein Drahtende durch das Prägen abgeflacht bzw. gleichsam plattgedrückt. So wird insbesondere aus einem Drahtende mit kreisförmigem bzw. ovalem Querschnitt ein flaches Drahtende mit relativ geringer Dicke. Es liegt im Rahmen der Erfindung, dass das zumindest eine umgeformte Drahtende einer erfindungsgemäßen Wärmebehandlung unterworden wird. Zweckmäßigerweise werden diese geprägten bzw. abgeflachten und der Wärmebehandlung unterworfenen Drahtenden für eine elektrische Verschaltung in Öffnungen bzw. Nuten eingeführt, empfohlenermaßen anschließend einem thermischen Verbindungsprozess unterzogen und nach besonders bevorzugter Ausführungsform verlötet. - Eine solche Verfahrensweise findet beispielsweise bei der Herstellung von Elektromotoren statt, wobei die Drähte für die Wicklungen an ihren Enden abisoliert, dann geprägt bzw. abgeflacht werden, daraufhin der erfindungsgemäßen Wärmebehandlung unterworfen und anschließend in eine Öffnung bzw. Nut eingeführt werden sowie durch einen thermischen Verbindungsprozess, insbesondere durch Löten verschaltet werden. Vorzugsweise findet die folgende Verfahrensschrittreihenfolge statt: Abisolieren zumindest eines Drahtendes - mechanisches Umformen bzw. Verformen des Drahtendes, insbesondere durch Prägen - erfindungsgemäße Wärmebehandlung - Einführen in eine Öffnung bzw. Nut - elektrische Verschaltung durch Löten.

Es empfiehlt sich, dass bei der ersten Ausführungsform der Erfindung der Verformungsgrad bei dem mechanischen Umformen des Drahtes bzw. des Drahtendes 5 bis 70 %, bevorzugt 25 bis 60 % und sehr bevorzugt 30 bis 55 % beträgt. Beispielsweise wird ein im Querschnitt kreisrundes Drahtende mit einem Durchmesser von 4 mm durch das mechanische Umformen bzw. durch Prägen zu einem flach gedrückten Drahtende mit einer Dicke von 2 mm.

Zweckmäßigerweise wird im Rahmen der ersten Ausführungsform der Erfindung der mit der Lackschicht bzw. mit den Lackschichten beschichtete - vorzugsweise bereichsweise abisolierte - und mechanisch umgeformte Draht bzw. dessen Drahtende einer Wärmebehandlung bei einer Temperatur von 130 bis 250 °C, bevorzugt von 150 bis 240 °C und sehr bevorzugt von 170 bis 230 °C unterworfen. Bei den genannten Temperaturen handelt es sich insbesondere um die Temperatur des Drahtes bzw. des Drahtendes bei der Wärmebehandlung. Wie oben bereits dargelegt, meint bereichsweise abisoliert insbesondere, dass in diesem Bereich bzw. in diesen Bereichen die Lackschicht bzw. die Lackschichten entfernt wurden. Zweckmäßigerweise wird/werden zumindest der abisolierte Bereich bzw. die abisolierten Bereiche des Drahtes bzw. des Drahtendes mechanisch umgeformt und es liegt im Rahmen der Erfindung, dass auch ein an den abisolierten Bereich anschließender - noch mit Lackschicht versehener - Bereich mit dem abisolierten Bereich mechanisch umgeformt. bzw. verformt wird. Fernerhin liegt es im Rahmen der Erfindung, dass zumindest die mechanisch umgeformten Bereiche des Drahtes bzw. des Drahtendes der erfindungsgemäßen Wärmebehandlung unterworfen werden.

Die Wärmebehandlung bei der ersten Ausführungsform kann insbesondere als Warmlagerung des Drahtes bzw. des Drahtendes bei entsprechender Temperatur stattfinden. Diese Warmlagerung wird zweckmäßigerweise in einem Ofen durchgeführt. Gemäß besonders bevorzugter Ausführungsvariante der Erfindung wird die Wärmebehandlung des Drahtes bzw. des Drahtendes im Rahmen der ersten Ausführungsform bei einer Temperatur von 180 bis 220 °C, bevorzugt von 190 bis 215 °C durchgeführt. Es liegt im Rahmen der Erfindung, dass diese Wärmebehandlung bei einer Temperatur im Bereich der Glasübergangstemperatur des Polymers der Grundlackschicht durchgeführt wird. Wie oben bereits dargelegt, handelt es sich bei den angegebenen Temperaturen insbesondere um die Temperatur des Drahtes bzw. des Drahtendes bei der Wärmebehandlung. Eine besonders empfohlene Ausführungsvariante der Erfindung zeichnet sich dadurch aus, dass die Wärmebehandlung bei der ersten Ausführungsform über einen Zeitraum von mindestens 5 Minuten, vorzugsweise von mindestens 10 Minuten durchgeführt wird. Zweckmäßigerweise erfolgt die Wärmebehandlung über einen Zeitraum von 10 bis 30 Minuten, bevorzugt über einen Zeitraum von 10 bis 25 Minuten beispielsweise über einen Zeitraum von 15 Minuten.

Eine zweite Ausführungsform der Erfindung ist dadurch gekennzeichnet, dass der mit zumindest einer Lackschicht versehene Draht zumindest über einen Großteil seiner Länge, bevorzugt über seine gesamte Länge bzw. im Wesentlichen über seine gesamte Länge dem mechanischen Umformprozess unterzogen wird und besonders bevorzugt bei diesem Umformprozess flachgewalzt bzw. flachgeprägt wird. Vorzugsweise wird der Draht zunächst als Runddraht - d. h. mit rundem, insbesondere kreisförmigen bzw. im Wesentlichen kreisförmigem Querschnitt - hergestellt und als Runddraht mit der zumindest einen Lackschicht beschichtet sowie anschließend dem mechanischen Umformungsprozess unterzogen. Nach dem Flachwalzen bzw.

Flachprägen wird der Draht dann als flachgeformter Draht der erfindungsgemäßen Wärmebehandlung unterzogen.

Die mechanische Umformung bzw. ein Flachwalzen des Drahtes bzw. Runddrahtes erfolgt gemäß einer Ausführungsvariante mit einer Mehrzahl von Walzenvorrichtungen bzw. Walzenpaaren. Hier können horizontal orientierte und/oder vertikal orientierte Walzenpaare zum Einsatz kommen.

Es liegt im Rahmen der Erfindung, dass der flachgewalzte bzw. flachgeprägte Draht bzw. Runddraht zwei in Längsrichtung des Drahtes verlaufende gegenüberliegende, runde/abgerundete Seiten aufweist. Es hat sich gezeigt, dass bei diesem umgeformten Draht die Lackbeschichtung und insbesondere die Schichtdicken der Lackbeschichtung sehr gleichmäßig ausgebildet ist/sind. Der auf diese Weise umgeformte Draht wird dann der erfindungsgemäßen Wärmebehandlung unterworfen.

Die erfindungsgemäße Wärmebehandlung kann bei der zweiten Ausführungsform wie bei der ersten Ausführungsform der Erfindung erfolgen. Dazu wird auf die obige Beschreibung sowie auf die oben genannten Parameter der Wärmebehandlung verwiesen. Gemäß einer bevorzugten Ausgestaltung der zweiten Ausführungsform wird die erfindungsgemäße Wärmebehandlung als Durchlauferhitzung des Drahtes durchgeführt. Nach einer empfohlenen Ausführungsvariante der zweiten Ausführungsform durchläuft dabei der Draht zumindest einen Ofen. Die Wärmebehandlung bzw. Durchlauferhitzung im Ofen erfolgt vorzugsweise bei einer Temperatur zwischen 400 °C und 800 °C, bevorzugt zwischen 450 °C und 750 °C und sehr bevorzugt zwischen 500 °C und 700°C. Dabei beträgt die Erhitzungszeit des Drahtes - insbesondere die Verweilzeit des Drahtes im Ofen - zweckmäßigerweise 1 bis 7 Sekunden, bevorzugt 1 bis 6 Sekunden und sehr bevorzugt 1 bis 5 Sekunden. - Nach einer weiteren Ausführungsvariante der zweiten Ausführungsform wird die Durchlauferhitzung des Drahtes mit Hilfe zumindest einer Induktionsschleife durchgeführt. Beim Durchlaufen dieser Induktionsschleife wird der Draht induktiv auf eine Temperatur zwischen 200° C und 350° C, bevorzugt zwischen 210° C und 300° C und besonders bevorzugt auf eine Temperatur zwischen 220° C und 280° C erhitzt. - Es empfiehlt sich, dass bei der zweiten Ausführungsform ein Abisolieren eines einem nachfolgenden Verarbeitungsprozess zu unterwerfenden Drahtabschnittes erst nach der erfindungsgemäßen Wärmebehandlung erfolgt.

Es liegt im Rahmen der Erfindung, dass der Draht - insbesondere zumindest ein Drahtende des Drahtes - bei beiden erfindungsgemäßen Ausführungsformen nach dem mechanischen Umformen und nach der erfindungsgemäßen Wärmebehandlung einem Verarbeitungsprozess, insbesondere einem thermischen Verbindungsprozess unterworfen wird. Weiterhin liegt es im Rahmen der Erfindung, dass dabei der Draht bzw. das zumindest eine Drahtende eine thermische Belastung bei einer Temperatur von 300 bis 600 °C, bevorzugt von 300 bis 500 °C erfährt. Eine solche thermische Belastung findet insbesondere während eines Lötprozesses statt. Zweckmäßigerweise wird der Draht bzw. das Drahtende mittels eines Lötprozesses verschaltet und dabei erfolgt eine Erhitzung des Drahtes bzw. des Drahtendes auf eine solche Temperatur, insbesondere auf eine Temperatur zwischen 350 und 450 °C, beispielsweise auf eine Temperatur von 400 °C. Außerdem liegt es im Rahmen der Erfindung, dass diese thermische Belastung über einen Zeitraum von mehreren Sekunden, insbesondere über einen Zeitraum von 2 bis 10 Sekunden, beispielsweise über einen Zeitraum von 4 Sekunden anhält.

Die Erfindung geht zunächst von der Erkenntnis aus, dass im Rahmen der aus dem Stand der Technik bekannten Maßnahmen ein mit Elektroisolierlack beschichteter mechanisch umgeformter Draht bzw. ein entsprechendes mechanisch umgeformtes Drahtende nach einem thermischen Verbindungsprozess, insbesondere in Form eines Lötprozesses zumindest im Bereich der Umformung nachteilhafte Risse in der vorhandenen Lackschicht aufweist. In diesem Zusammenhang liegt der Erfindung weiterhin die Erkenntnis zugrunde, dass solche Risse weitgehend bzw. vollständig vermieden werden können, wenn die lackbeschichteten, mechanisch umgeformten Drähte bzw. Drahtenden der erfindungsgemäßen Wärmebehandlung unterworfen werden. Außerdem liegt der Erfindung insbesondere die Erkenntnis zugrunde, dass diese Wärmebehandlung gerade bei den im Rahmen der Erfindung für die Lackschichten vorgesehenen Polymeren sehr funktionssichere und effektive Ergebnisse bringt. Der erfindungsgemäße Erfolg wird dabei mit sehr einfachen, wenig aufwändigen und kostengünstigen Maßnahmen erreicht. Bei Realisierung der erfindungsgemäßen Wärmebehandlung werden nach einer darauf folgenden thermischen Belastung - insbesondere in Form eines Lötprozesses - nachteilhafte Beeinträchtigungen der Lackschichten, insbesondere im Bereich der Verformungsbereiche des Drahtes nicht mehr beobachtet. Zu betonen ist vor allem, dass die Lackschicht bzw. die Lackschichten der erfindungsgemäß behandelten Drähte bzw. Drahtenden auch langfristig überraschend mechanisch und thermisch widerstandsfähig sind. Vor allem auch bei der zweiten Ausführungsform mit dem flachgeformten Draht bzw. Runddraht ergeben sich optimale Eigenschaften der Lackschicht bzw. der Lackschichtdicken insbesondere im Kantenbereich bzw. abgerundeten Kantenbereich der Flachdrähte. - Die erfindungsgemäße Behandlung bringt überraschenderweise auch eine Verbesserung der Verarbeitbarkeit des Metalldrahtes und insbesondere eine verbesserte Verwickelbarkeit und mechanische Verformbarkeit des Metalldrahtes mit sich. Das gilt vor allem für Metalldrähte aus Kupfer. Im Ergebnis können bei einer kostengünstigen Produktion im Vergleich zu den aus dem Stand der Technik bekannten Maßnahmen die Eigenschaften der lackbeschichteten Drähte erheblich verbessert werden. Die aus dem Stand der Technik bekannten und eingangs geschilderten Nachteile werden quasi vollständig vermieden.

Gegenstand der Erfindung ist auch ein mit Elektroisolierlack beschichteter Draht, der vorzugsweise nach einem vorstehend beschriebenen Verfahren hergestellt wird. Dieser Draht ist mit zumindest einer Lackschicht beschichtet und ist zumindest bereichsweise umgeformt. Erfindungsgemäß ist der umgeformte Draht bzw. das umgeformte Drahtende zumindest bereichsweise einer erfindungsgemäßen Wärmebehandlung unterzogen worden. - Gegenstand der Erfindung ist weiterhin ein Aggregat - insbesondere eine Spule - mit zumindest einem erfindungsgemäßen Draht.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines Drahtes vor der erfindungsgemäßen Behandlung,
- Fig. 2: den Gegenstand nach Fig. 1 in einer ersten Ausführungsform nach der erfindungsgemäßen Behandlung und
- Fig. 3: den Gegenstand nach Fig. 1 in einer zweiten Ausführungsform nach der erfindungsgemäßen Behandlung.

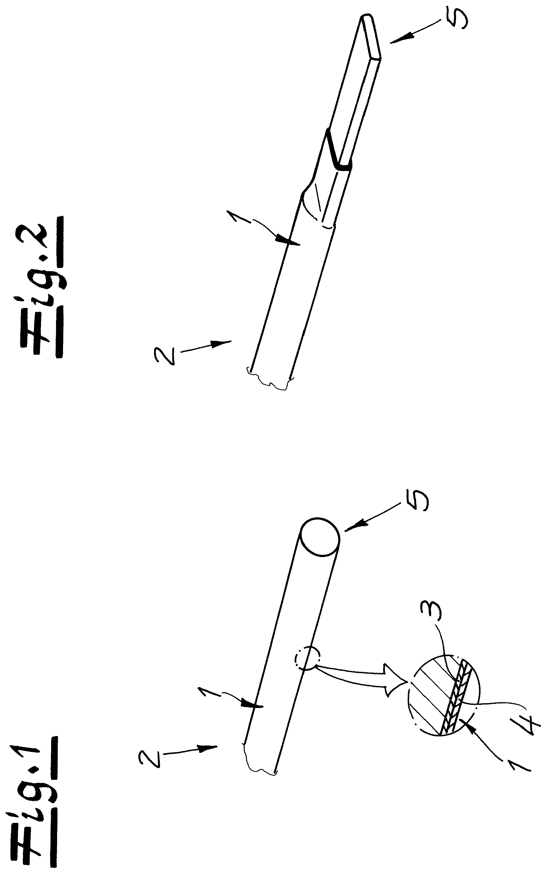

Die Fig. 1 zeigt das Drahtende (5) eines Drahtes (2) mit kreisrundem Querschnitt. Der Draht (2) ist mit einer inneren Lackschicht (3) beschichtet, wobei diese innere Lackschicht (2) aus einem Polyesterimid oder aus einem Polyester und bevorzugt aus einem THEIC-modifizierten Polyesterimid oder aus einem THEIC-modifizierten Polyester bestehen mag. Auf die innere Lackschicht (3) ist im Ausführungsbeispiel eine äußere Lackschicht (4) aufgebracht. Diese äußere Lackschicht (4) besteht nach bevorzugter Ausführungsform und im Ausführungsbeispiel aus Polyamidimid. Der Draht (2) mag im Ausführungsbeispiel aus Kupfer bestehen. Die Fig. 1 zeigt somit einen mit Elektroisolierlack (1) beschichteten Draht (2) mit einem Zweischicht-Lacksystem aus innerer Lackschicht (3) und äußerer Lackschicht (4). Die Gesamtschichtdicke der beiden Lackschichten (3, 4) mag im Ausführungsbeispiel 50µm betragen.

Bei der ersten Ausführungsform des erfindungsgemäßen Verfahrens wird zur Vorbereitung der elektrischen Verschaltung des Drahtes (2) das Drahtende (5) einem mechanischen Umformungsprozess unterworfen und zwar im Ausführungsbeispiel einem flachen Prägen, so dass nach dem Prägen ein flachgedrücktes Drahtende (5) resultiert (s. Fig. 2). Vor der Verbindung bzw. elektrischen Verschaltung dieses Drahtendes (5) wird das mechanische umgeformte Drahtende (5) erfindungsgemäß einer Wärmebehandlung unterzogen. Die Wärmebehandlung mag im Ausführungsbeispiel und nach bevorzugter Ausführungsform über 15 Minuten bei einer Temperatur von 210 °C stattgefunden haben. Dabei kann die Erwärmung als Wärmelagerung beispielsweise in einem Ofen stattfinden.

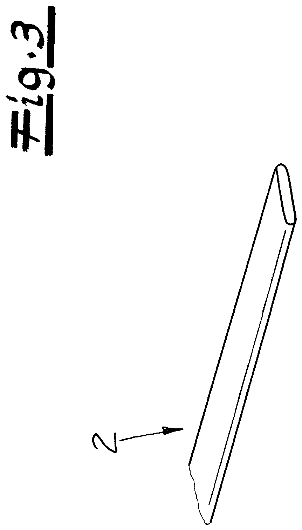

Bei der zweiten Ausführungsform des erfindungsgemäßen Verfahrens wird der gesamte Draht (2) einem mechanischen Umformungsprozess unterworfen. Im Ausführungsbeispiel wurde ein mit den Lackschichten versehener runder Draht (2) bzw. Runddraht dem mechanischen Umformungsprozess unterworfen und zwar wurde dieser Draht im Ausführungsbeispiel flachgewalzt. Dabei resultiert der in Fig. 3 dargestellte flachgewalzte Draht (2) bzw. Flachdraht, wobei die gegenüberliegenden Kanten dieses Drahtes abgerundet ausgebildet sind. Vor der weiteren Verarbeitung bzw. vor der elektrischen Verschaltung des Drahtes (2) wird der gesamte mechanisch umgeformte Draht (2) einer erfindungsgemäßen Wärmebehandlung unterworfen. Dabei findet die Wärmebehandlung zweckmäßigerweise als Durchlauferhitzung statt. Gemäß einer Ausführungsvariante der zweiten Ausführungsform wird der flachgewalzte Draht (2) dabei durch einen Ofen geführt und zwar vorzugsweise bei einer Ofentemperatur von 500 °C bis 700 °C. Beim Durchlaufen des Ofens wird der Draht (2) bzw. ein entsprechender Drahtabschnitt des Drahtes (2) für etwa 2 bis 5 Sekunden dieser Temperatur ausgesetzt. - Gemäß einer weiteren Ausführungsvariante der zweiten Ausführungsform wird die als Durchlauferhitzung durchgeführte Wärmebehandlung des Drahtes mit Hilfe einer Induktionsschleife realisiert. Dabei wird vorzugsweise der durchlaufende Draht induktiv auf eine Temperatur von 210° C bis 250° C erhitzt.

Erst nach der erfindungsgemäßen Wärmebehandlung erfolgt bei beiden Ausführungsformen die elektrische Verbindung bzw. Verschaltung des Drahtendes (5). Dazu wird das flachgedrückte bzw. flachgewalzte Drahtende (5) zweckmäßigerweise in eine Öffnung bzw. Nut eingeführt und anschließend verlötet. Der Lötprozess mag über mehrere Sekunden mit einer thermischen Belastung von etwa 400 °C verbunden sein. Der erfindungsgemäß behandelte Draht (2) bzw. das erfindungsgemäß behandelte Drahtende (5) weist im Bereich der Lötstelle keinerlei störende Risse in der angrenzenden Lackschicht bzw. in den angrenzenden Lackschichten (3, 4) auf.

Zur Veranschaulichung des erfindungsgemäßen Erfolges wurde die folgende Vergleichsprüfung durchgeführt: Zwei Kupferdrähte wiesen ein Zweischicht-Lacksystem mit einer inneren Lackschicht aus einem THEIC-modifiziertem Polyesterimid und einer äußeren Lackschicht aus einem Polyamidimid auf. Der Durchmesser der beiden im Querschnitt kreisrunden Drähte betrug 4 mm. An jeweils einem Drahtende der beiden Drähte wurden über eine Länge von 10 mm des Drahtendes die Lackschichten mechanisch entfernt und zwar so, dass eine gerade rissfreie Kante zwischen lackschichtfreiem Draht und beschichtetem Draht verblieb. Die Drahtenden wurden dann in einem Werkzeug zwischen zwei parallel zueinander angeordneten polierten Platten auf eine Dicke von 2 mm flach geprägt. - Anschließend wurde eines der Drahtenden einer erfindungsgemäßen Wärmebehandlung ausgesetzt und zwar wurde das Drahtende für 15 Minuten bei einer Temperatur von 210 °C gehalten. Das andere Drahtende erfuhr keine solche Wärmebehandlung.

Daraufhin wurden beide geprägten Drahtenden 12 mm tief für 4 Sekunden in ein 400 °C heißes Zinnbad getaucht. Das Drahtende ohne erfindungsgemäße Wärmebehandlung zeigte im Bereich der Kante deutliche Risse in den Lackschichten. Dagegen waren bei dem erfindungsgemäß wärmebehandelten Drahtende im Bereich des eingetauchten Drahtendes keinerlei Risse in der Lackschicht erkennbar.

## Patentansprüche

1. Verfahren zur Herstellung eines mit Elektroisolierlack (1) beschichteten Drahtes (2), wobei der Draht (2) mit zumindest einer Lackschicht (3, 4) beschichtet wird, wobei der Draht (2) daraufhin einem mechanischen Umformungsprozess unterzogen wird und wobei der umgeformte Draht (2) anschließend einer Wärmebehandlung bei einer Temperatur über 100 °C, bevorzugt über 130 °C unterworfen wird.

2. Verfahren nach Anspruch 1, wobei ein Draht (2) eingesetzt wird, der aus Kupfer und/oder Aluminium bzw. im Wesentlichen aus Kupfer und/oder Aluminium besteht.

3. Verfahren nach einem der Ansprüche 1 oder 2, wobei die Lackschicht (3, 4) die äußere Lackschicht (4) des Drahtes (2) ist.

4. Verfahren nach einem der Ansprüche 1 bis 3, wobei zumindest eine innere Lackschicht (3) auf den Leiterdraht (2) aufgebracht wird und wobei auf die innere Lackschicht (3) die Lackschicht (4) bzw. die äußere Lackschicht (4) aufgebracht wird.

5. Verfahren nach einem der Ansprüche 1 bis 4, wobei eine Lackschicht (4) bzw. die äußere Lackschicht (4) auf Basis zumindest eines Polymers aus der Gruppe "Polyamidimid, Polyester, Polyesterimid, Polyesteramidimid, Polyimid, Polyamid, Polyurethan, Polyepoxid" eingesetzt wird.

6. Verfahren nach einem der Ansprüche 4 oder 5, wobei der Draht (2) nach dem Aufbringen der inneren Lackschicht (3) auf eine Temperatur von 150 bis 450 °C, bevorzugt auf eine Temperatur von 200 bis 440 °C erwärmt wird.

7. Verfahren nach einem der Ansprüche 1 bis 6, wobei der Draht (2) nach dem Aufbringen der Lackschicht (4) bzw. der äußeren Lackschicht (4) auf eine Temperatur von 150 bis 450 °C, vorzugsweise auf eine Temperatur von 200 bis 400 °C erwärmt wird.

8. Verfahren nach einem der Ansprüche 1 bis 7, wobei zumindest ein Drahtende (5) des Drahtes (2) durch Prägen bzw. durch flaches Prägen mechanisch verformt wird.

9. Verfahren nach einem der Ansprüche 1 bis 8, wobei zumindest das mit der Lackschicht (4) bzw. mit den Lackschichten (3, 4) beschichtete - vorzugsweise bereichsweise abisolierte - und mechanisch umgeformte zumindest eine Drahtende (5) einer Wärmebehandlung bei einer Temperatur von 130 bis 250 °C, bevorzugt von 150 bis 240 °C und sehr bevorzugt von 170 bis 230 °C unterworfen wird.

10. Verfahren nach einem der Ansprüche 1 bis 9, wobei die Wärmebehandlung über einen Zeitraum von mindestens 5 Minuten, vorzugsweise über einen Zeitraum von mindestens 10 Minuten durchgeführt wird.

11. Verfahren nach einem der Ansprüche 1 bis 7, wobei der Draht (2) zumindest über einen Großteil seiner Länge, bevorzugt über seine gesamte Länge bzw. im Wesentlichen über seine gesamte Länge dem mechanischen Umformungsprozess unterzogen wird und besonders bevorzugt bei diesem Umformungsprozess flachgewalzt bzw. flachgeprägt wird.

12. Verfahren nach Anspruch 11, wobei der mit der Lackschicht (4) bzw. mit den Lackschichten (3, 4) beschichtete und mechanisch umgeformte Draht (2) einer Wärmebehandlung in Form einer Durchlauferhitzung unterworfen wird.

13. Verfahren nach Anspruch 12, wobei die Durchlauferhitzung des Drahtes (2) in einem Ofen erfolgt und zwar bevorzugt bei einer Temperatur von 400° C bis 800° C, bevorzugt von 450° C bis 750° C und sehr bevorzugt von 500° C bis 700° C.

14. Verfahren nach einem der Ansprüche 12 oder 13, wobei die Durchlauferhitzung über einen Zeitraum von 1 bis 7 Sekunden, bevorzugt 1 bis 6 Sekunden und sehr bevorzugt 1 bis 5 Sekunden durchgeführt wird.

15. Verfahren nach einem der Ansprüche 11 bis 14, wobei die Durchlauferhitzung mittels Induktion durchgeführt wird, wobei der Draht dazu durch zumindest eine Induktionsschleife geführt wird und wobei der Draht vorzugsweise induktiv auf eine Temperatur von 200° C bis 350° C, vorzugsweise auf eine Temperatur von 210° C bis 300° C und bevorzugt auf eine Temperatur von 220° C bis 250° C erwärmt bzw. erhitzt wird.

16. Verfahren nach einem der Ansprüche 1 bis 15, wobei der Verformungsgrad beim mechanischen Umformen des Drahtes (2) bzw. des Drahtendes (5) 5 bis 70 %, vorzugsweise 25 bis 60 % und bevorzugt 30 bis 55 % beträgt.

17. Verfahren nach einem der Ansprüche 1 bis 16, wobei der Draht (2) - insbesondere zumindest ein Drahtende (5) des Drahtes (2) - einem Verarbeitungsprozess, insbesondere einem thermischen Verbindungsprozess unterworfen wird und wobei der Draht (2) bzw. das zumindest eine Drahtende (5) dabei eine thermische Belastung bei einer Temperatur von 300 bis 600 °C, bevorzugt bei einer Temperatur von 300 bis 500 °C erfährt.

18. Mit Elektroisolierlack beschichteter Draht (2) - insbesondere hergestellt durch ein Verfahren nach einem der Ansprüche 1 bis 17 - wobei der Draht (2) mit zumindest einer Lackschicht (3, 4) beschichtet ist und zumindest bereichsweise mechanisch umgeformt ist und wobei der umgeformte Draht zumindest bereichsweise wärmebehandelt ist.

19. Aggregat, insbesondere Spule, mit einem Draht (2) nach Anspruch 18.
